# EUROPÄISCHE PATENTSCHRIFT

(11) **EP 2 740 631 B1**
(45) Veröffentlichungstag und Bekanntmachung des Hinweises auf die Patenterteilung: **09.03.2016**
(21) Anmeldenummer: 13194885.3
(22) Anmeldetag: 28.11.2013
(51) Int. Cl.: B60P 1/00

(54) **Abschiebewagen zum Transport von heißem Gut**
Push-off carriage for transporting hot goods
Chariot de déversement pour le transport de produits chauds

(30) Priorität: 05.12.2012 DE 202012104724 U
(43) Veröffentlichungstag der Anmeldung: 11.06.2014
(73) Patentinhaber: Fliegl jun., Josef, 84453 Mühldorf am Inn (DE)
(72) Erfinder: Fliegl jun., Josef, 84453 Mühldorf am Inn (DE)
(74) Vertreter: Tetzner, Michael

(56) Entgegenhaltungen:
- EP-A1- 1 221 398
- DE-U1- 20 117 346
- DE-U1-202004 015 512
- FR-A1- 2 862 294
- FR-A1- 2 954 243
- NL-C- 20 641
- US-A- 3 212 657
- US-A- 3 273 728
- US-A- 3 887 153

## Beschreibung

Die Erfindung betrifft einen Abschiebewagen zum Transport von heißem Gut, insbesondere zum Transport von Asphalt, mit einer Mulde, die eine Entladeöffnung aufweist sowie einer Austragseinrichtung zum Austrag des heißen Guts über die Entladeöffnung.

Eine Asphaltschicht ist nur dann stabil und langlebig, wenn sie möglichst wenige Hohlräume hat und dies setzt voraus, dass sie optimal verdichtet wurde. Dies lässt sich aber nur dann erreichen, wenn der aufzubringende Asphalt heiß genug ist. Dies ist in der Praxis aber oftmals nicht der Fall.

Beim Straßenbau wird der heiße Asphalt üblicherweise auf Lastwägen mit Kippmulden transportiert, wobei der heiße Asphalt durch Kippen der Mulde direkt in die Asphalttiermaschine eingetragen wird. Dabei ergibt sich die Problematik, dass der heiße Asphalt während des Transports vom Asphaltwerk zur Asphalttiermaschine meist bereits sehr stark abkühlt, sodass eine optimale Verdichtung nicht mehr möglich ist. Außerdem bilden sich im Fahrzeug kalte Nester, die ein gleichmäßiges Austragen des Asphalts in die Asphalttiermaschinen behindern und ein ungleichmäßiges Rutschen des Guts zur Folge haben. An den abgekühlten Seitenwänden und am Boden bleibt oftmals sehr viel Asphalt kleben, welcher meist sehr zeitaufwändig von Hand abgekratzt werden muss. Eine weitere Schwierigkeit ergibt sich bei der Verwendung von großen Kippern, wenn unter Oberleitungen, Bäumen, Brücken oder in Straßentunneln asphaltiert werden soll.

In der DE-A-2 040 885 wird ein Transportfahrzeug zur Zuführung von Asphalt zu einer Asphalttiermaschine beschrieben, dessen Mulde im Bodenbereich ein Förderband aufweist. Auf diese Weise kann das Anheben bzw. Kippen der Ladefläche vermieden werden. Die Integration des Förderbands am Boden der Mulde ist jedoch gerade hinsichtlich des Verschleißes durch den heißen Asphalt mit einem großen Aufwand verbunden. Außerdem ist vor dem Beladen mit heißem Asphalt ein Besprühen der Ladefläche mit einem Schmiermittel erforderlich. Der Einsatzbereich dieses Systems ist daher sehr eingeschränkt.

Aus der US 3 887 153 A ist Transportfahrzeug mit einer Abschiebewand gemäß dem Oberbegriff des Anspruches 1 bekannt. Die Mulde ist dort als doppelwandiger, isolierter Holzkasten ausgebildet.

Der Erfindung liegt daher die Aufgabe zugrunde, ein Fahrzeug anzugeben, dass für den Transport von heißem Gut, insbesondere von heißem Asphalt geeignet ist und einen gleichmäßigen Austrag, insbesondere in einer Asphalttiermaschine ermöglicht.

Erfindungsgemäß wird diese Aufgabe durch die Merkmale des Anspruches 1 gelöst.

Der erfindungsgemäße Abschiebewagen zum Transport von heißem Gut, insbesondere zum Transport von Asphalt weist eine Mulde mit einer Entladeöffnung sowie eine Austragseinrichtung zum Austragen des heißen Guts über die Entladeöffnung auf, wobei die Mulde durch einen Muldenboden, zwei Seitenwände, eine im Bereich der Entladeöffnung angeordnete, vorzugsweise verschwenkbar ausgebildete Rückwand und die Abschiebewand begrenzt wird und isoliert ausgebildet ist und die Austragseinrichtung eine in der Mulde vorgesehene und in Richtung der Entladeöffnung verschiebbare Abschiebewand umfasst. Die Abschiebewand ist ferner mit federvorgespannten Dichtklappen versehen ist, welche die beiden Spalte zwischen Abschiebewand und den beiden Seitenwänden abdecken, wobei jeder Spalt mit einer Vielzahl von nebeneinander angeordneten Dichtklappen abgedeckt ist.

Durch die Isolierung der Mulde wird ein frühzeitiges Abkühlen des heißen Asphalts, bevor der Asphalt in die Asphalttiermaschine gelangt, vermieden, sodass der Austrag von kalten Asphaltnestern in die Asphalttiermaschine und eine daraus resultierende mangelhafte Asphaltdecke, verhindert werden. Durch die Abschiebewand wird darüber hinaus ein gleichmäßiger Austrag des heißen Gutes gewährleistet. Zudem wird durch das "scheibchenweise" Abrutschen das Mischgut während des Abladens nochmals durchmischt, wodurch die Entmischung des zu transportierenden heißen Gutes wesentlich reduziert wird. Gleichmäßig heißes und homogenes Mischgut ist die Grundvoraussetzung für eine dauerhafte Asphaltdecke. Mit der erfindungsgemäßen Austragseinrichtung ist somit ein Kippen der Mulde zum Austrag des Gutes nicht erforderlich, sodass auch der durch ein Kippen bedingte ungleichmäßige Austrag vermieden wird. Darüber hinaus kann der erfindungsgemäße Abschiebewagen auch überall dort eingesetzt werden, wo die Höhe für einen Kippvorgang nicht zur Verfügung steht.

Weitere Ausgestaltungen der Erfindung sind Gegenstand der Unteransprüche.

Bei der Mulde können zumindest die Seitenwände, vorzugsweise aber auch der Boden, isoliert ausgebildet werden.

Die Austrageinrichtung ist vorzugsweise 2-stufig ausgebildet, wobei eine erste Stufe durch einen Schiebeboden gebildet wird, der zusammen mit der Abschiebewand in Richtung der Entladeöffnung verschiebbar ist und die zweite Stufe durch die Abschiebewand gebildet wird, die relativ zum Schiebeboden verschiebbar ist. Auf diese Weise kann der Kraftaufwand für den Entladevorgang deutlich reduziert werden, weil der Reibwiderstand zwischen dem heißen Gut und dem Muldenboden um die anteilige Fläche des Schiebebodens reduziert wird.

Gemäß einer weiteren Ausgestaltung kann dann auch der Schiebeboden und/oder die Abschiebewand isoliert ausgebildet werden.

Neben den vorgespannten Dichtklappen, welche die beiden Spalte zwischen Abschiebewand und den Seitenwänden abdecken, kann die Abschiebewand auch mit Dichtklappen versehen sein, die den Spalt zwischen Abschiebewand und dem Schiebeboden abdecken. Weiterhin kann auch der Schiebeboden an einer der Entladeöffnung zugewandten Vorderkante Dichtklappen aufweisen, die den Spalt zwischen der Vorderkante des Schiebebodens und dem Muldenboden abdecken. Dabei kann jede Dichtklappe mit einem zugeordneten Federelement in eine Dichtstellung vorgespannt wird. Durch die federvorgespannten Dichtklappen wird verhindert, dass sich klebriges Material (Asphalt o.ä.) an der Seitenwand oder Muldenboden anklebt und macht ein sonst sehr zeitaufwändiges manuelles Reinigen von Hand überflüssig.

Gemäß einer weiteren Ausgestaltung der Erfindung sind zumindest einzelne, vorzugsweise alle Dichtklappen isoliert ausgebildet. Dies kann dadurch realisiert werden, dass die Dichtklappen mit einem Hohlraum zur Wärmeisolation ausgebildet sind. Die Dichtklappen können dabei beispielsweise in Sandwichbauweise ausgebildet sein, wobei eine mittlere Lage durch eine Isolierung oder einen isolierenden Hohlraum gebildet wird. Durch die Isolierung bzw. den als Isolierung ausgebildeten Hohlraum wird der Wärmeverlust des Gutes entsprechend reduziert. Ein Ankleben des Gutes durch zu starkes Abkühlen kann dadurch vermieden werden.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung der Mulde mit Austragseinrichtung,
- Fig. 2: eine Querschnittdarstellung der Mulde gemäß Fig. 1,
- Fig. 3: eine Draufsicht der Mulde gemäß Fig. 1,
- Fig. 4: eine Längsschnittdarstellung im Bereich der Austragseinrichtung,
- Fig. 5: eine dreidimensionale Darstellung der Austragseinrichtung,
- Fig. 6: eine Detailansicht der Dichtklappen zwischen Abschiebewand und Seitenwand,
- Fig. 7: eine Detailansicht der Dichtklappen zwischen Schiebeboden und Muldenboden,
- Fig. 8: eine Schnittdarstellung einer isolierten Dichtklappe und
- Fig. 9: eine dreidimensionale Darstellung der isolierten Dichtklappe gemäß Fig.8.

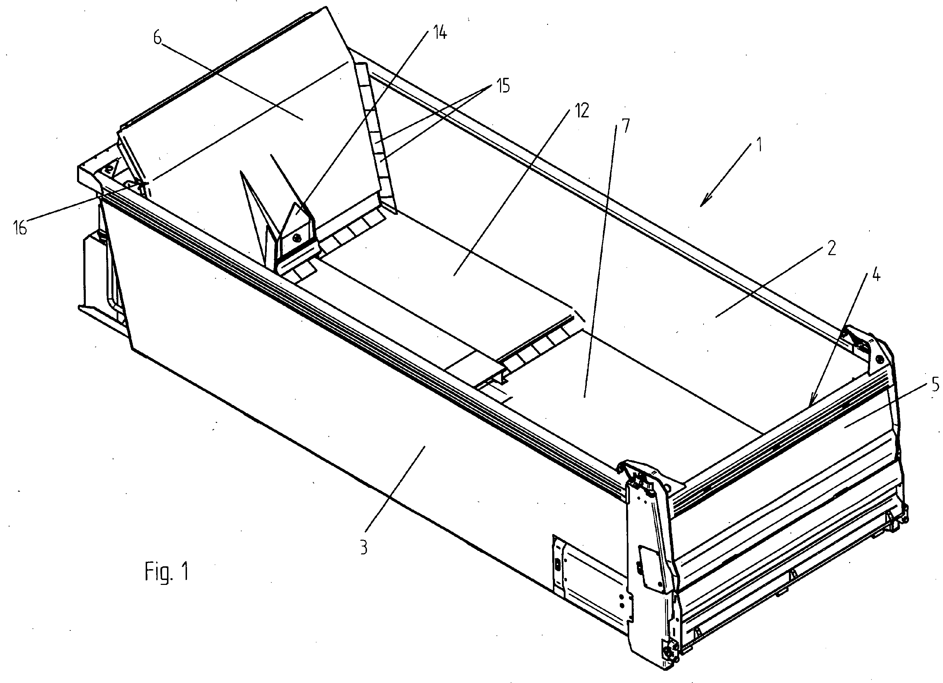

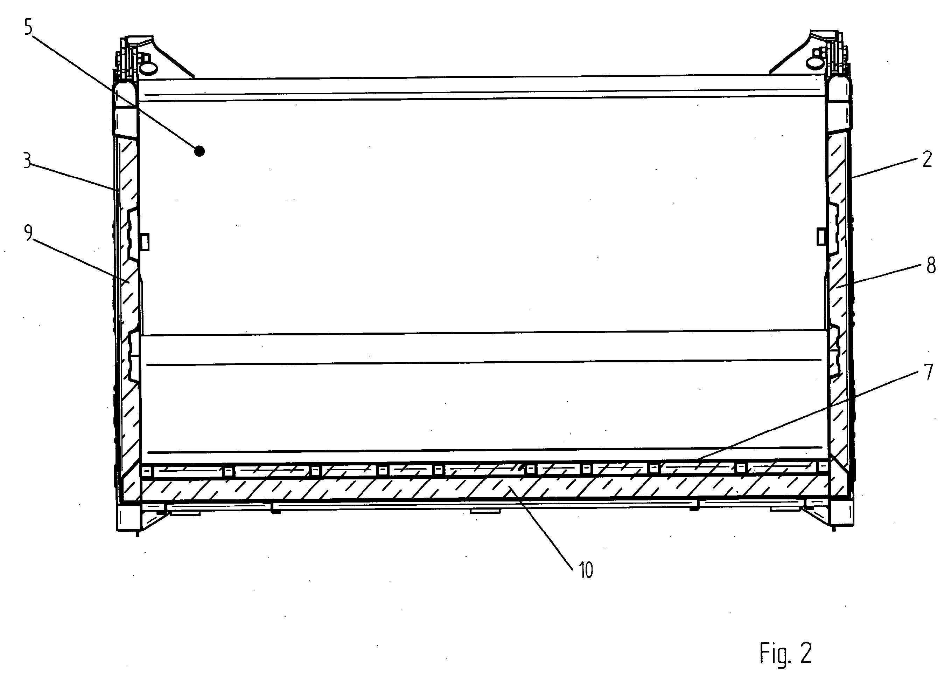

In den Figuren 1 bis 3 ist eine Mulde 1 gezeigt, die auf einem herkömmlichen, nicht näher dargstellten Lastwagen montiert sein kann. Sie wird durch zwei Seitenwände 2, 3, eine im Bereich einer Entladeöffnung 4 angeordnete, vorzugsweise verschwenkbar ausgebildete Rückwand 5, eine Abschiebewand 6 und einen Muldenboden 7 begrenzt. Wie sich aus der Schnittdarstellung gemäß Fig. 2 ergibt, sind die Seitenwände 2, 3 mit Isolierungen 8, 9 versehen. Auch der Muldenboden 7 weist eine Isolierung 10 auf.

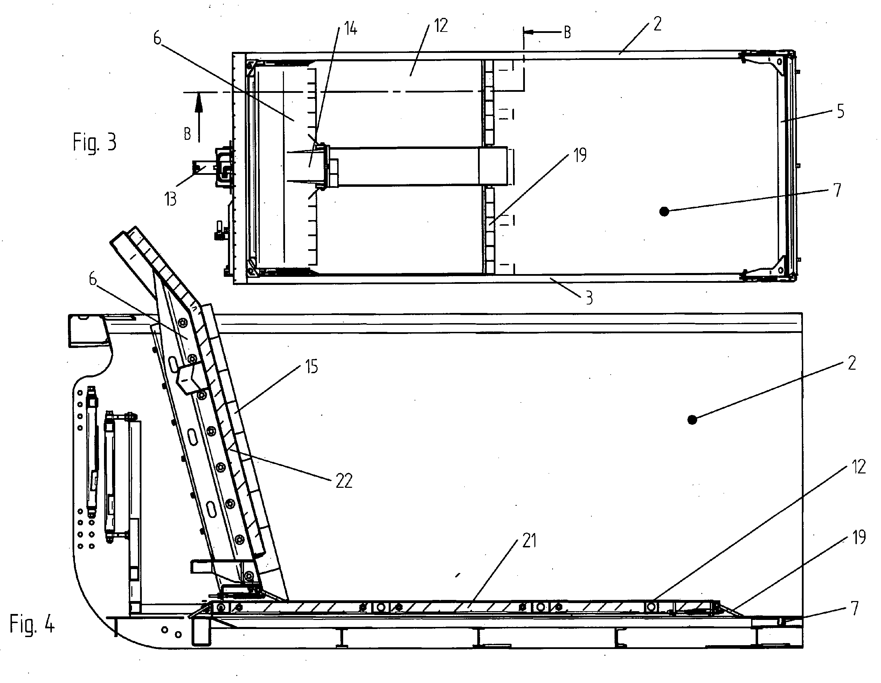

Die Abschiebewand 6 ist Teil einer Austragseinrichtung 11, die in den Figuren 1, 3, 4 und 5 näher dargestellt ist. Sie besteht im Wesentlichen aus der Abschiebewand 6 und einem Schiebeboden 12, wobei der Schiebeboden 12 zusammen mit der Abschiebewand 6 von der in der Fig. 3 gestellten Stellung in Richtung der Rückwand 5 über einen ersten Antrieb 13 verschoben werden kann. Des Weiteren ist die Abschiebewand 6 relativ zum Schiebeboden 12 über einen zweiten Antrieb 14 verschiebbar. Die beiden Antrieb 13, 14 können jeder in geeigneter Art und Weise ausgebildet werden, wobei beispielsweise Hydraulikzylinder, eine mit einer Gewindespindel zusammenwirkende Laufmutter oder eine über ein Kettenrad angetriebene Rollkette zum Einsatz kommen können. Die dargestellte Austragseinrichtung 11 ist somit 2-stufig ausgebildet, wobei zur Entladung der mit einer heißen Gut beladenden Mulde 1 zunächst die Rückwand 5 verschwenkt wird, um die Entladeöffnung 4 freizugeben. Alsdann wir der Schiebeboden 12 zusammen mit der Abschiebewand 6 von der in Fig. 3 gezeigten Stellung in Richtung der Entladeöffnung 4 verschoben. Auf diese Weise kann etwa die Hälfte des geladenen Gutes ausgetragen werden. Der Rest erfolgt dann durch eine Verschiebung der Abschiebewand 6 relativ zum stillstehenden Schiebeboden 12. Auf diese Weise wird die Abschiebewand 6 über die gesamte Länge der Mulde in zwei Stufen verschoben werden.

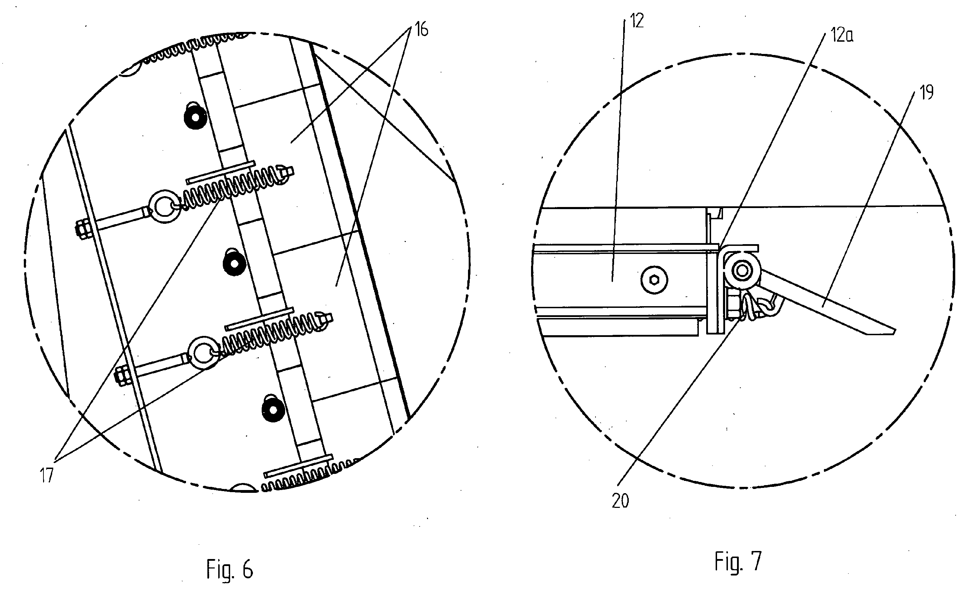

Der zwischen Abschiebewand 6 und den Seitenwänden 2, 3 vorhandene schmale Spalt wird durch Dichtklappen 15, 16 abgedeckt, wobei auf jede Seite eine Vielzahl von unmittelbar nebeneinander angeordneten Dichtklappen 15 bzw. 16 vorgesehen ist. Aus der Detailansicht gemäß Fig. 6 ist ersichtlich, dass jede Dichtklappe 15 bzw.

16 mit einem zugeordneten Federelement 17 versehen ist, wobei die Dichtklappen 15, 16 durch das Federelement 17 in die Dichtstellung vorgespannt sind. Nachdem die Dichtklappen 15, 16 schwenkbeweglich an der Abschiebewand befestigt sind, werden die Dichtklappen durch das Federelement 17 gegen die jeweils zugeordnete Seitenwand 2, 3 gedrückt und schaben dabei beim Entladevorgang an den Seitenwänden entlang und verhindern dadurch, dass etwaiges Gut in den Spalt zwischen Abschiebewand 6 und der jeweiligen Seitenwand 2, 3 gelangt.

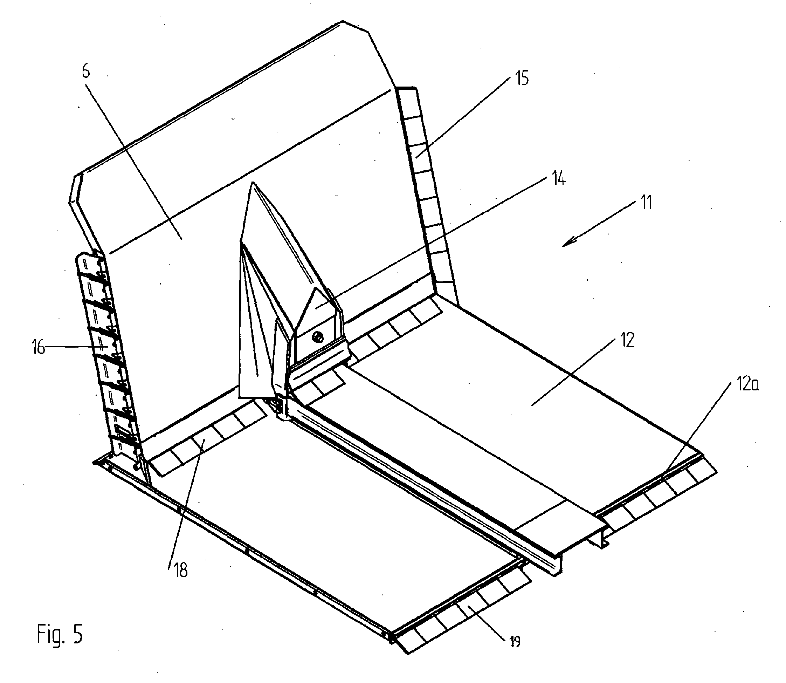

In entsprechender Weise sind auch federvorgespannte Dichtklappen 18 am unteren Ende der Schiebewand 6 vorgesehen, um den Spalt zwischen Abschiebewand 6 und Schiebeboden 12 abzudecken (Fig. 5). Schließlich sind noch Dichtklappen 19 im Bereich der Vorderkante 12a des Schiebebodens 12 angeordnet, um den Spalt zwischen der Vorderkante 12a des Schiebebodens 12 und dem Muldenboden 7 abzudecken. Auch die Dichtklappen 18, 19 sind jeweils schwenkbeweglich an der Abschiebewand 6 bzw. dem Schiebeboden 12 angelenkt und mit einem entsprechenden Federelement 20 in ihre Dichtstellung vorgespannt.

Aus Fig. 4 wird ferner ersichtlich, dass auch der Schiebeboden 12 und die Abschiebewand 6 jeweils mit einer Isolierung 21 bzw. 22 versehen sind.

Durch die Isolierungen wird das heiße Gut auf dem Weg zur Entladestelle nur geringfügig abgekühlt. Gerade in den Randbereichen bilden sich keine kalten Nester, die im Falle von Asphalt eine verminderte Qualität der Asphaltdecke hervorrufen. Im Gegensatz zum Abkippen ist der Austrag mit der Austragseinrichtung 11 wesentlich gleichmäßiger, sodass eine sehr gleichmäßige und kontinuierliche Beladung einer Asphalttiermaschine möglich ist.

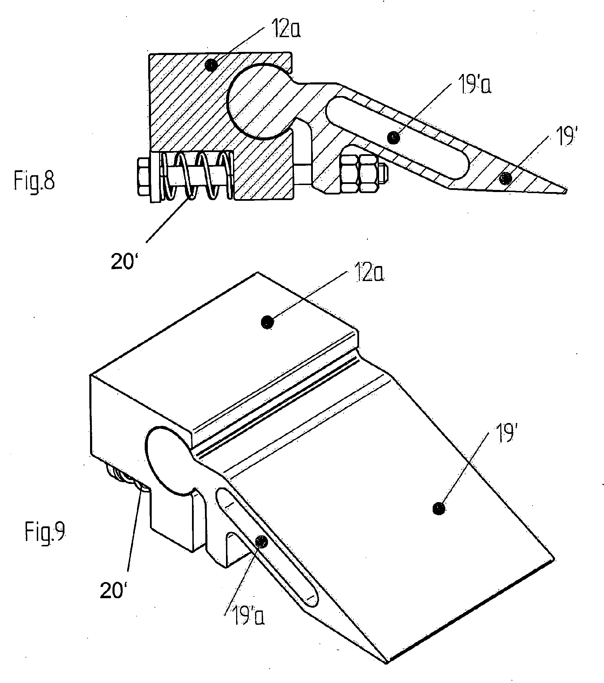

Die Fig. 8 und 9 zeigen ein Ausführungsbeispiel mit isoliert ausgebildeten Dichtklappen 19', die hier im Bereich Vorderkante 12a des Schiebebodens schwenkbeweglich angeordnet sind. Die Dichtklappen 19' sind in Sandwichbauweise mit einem Hohlraum 19'a zur Wärmeisolation ausgebildet. Durch den Hohlraum wird der Wärmeverlust des auf den Dichtklappen liegenden Gutes entsprechend reduziert, sodass ein Ankleben des Gutes durch zu starkes Abkühlen vermieden wird.

Auch die Dichtklappen 19' können schwenkbeweglich an der Abschiebewand 6 dem Schiebeboden 12 angelenkt sein und optional mit einem entsprechenden Federelement 20' in ihre Dichtstellung vorgespannt. Auf diese Weise kann ein 100%ige Anlage am Boden oder der Seitenwand sichergestellt werden.

## Patentansprüche

1. Abschiebewagen zum Transport von heißem Gut, insbesondere zum Transport von Asphalt, mit einer Mulde (1), die eine Entladeöffnung (4) aufweist, sowie einer Austragseinrichtung (11) zum Austrag des heißen Guts über die Entladeöffnung, wobei
die Mulde (1) durch einen Muldenboden (7), zwei Seitenwände (2, 3), eine im Bereich der Entladeöffnung (4) angeordnete, vorzugsweise verschwenkbar ausgebildete Rückwand (5) und eine Abschiebewand (6) begrenzt wird und die Mulde isoliert ausgebildet ist und die Austragseinrichtung (11) die in der Mulde (1) vorgesehene und in Richtung der Entladeöffnung (4) verschiebbare Abschiebewand (6) umfasst,
**dadurch gekennzeichnet, dass** die Abschiebewand (6) mit federvorgespannten Dichtklappen (15, 16) versehen ist, welche die beiden Spalte zwischen Abschiebewand (6) und den beiden Seitenwänden (2, 3) abdecken, wobei jeder Spalt mit einer Vielzahl von nebeneinander angeordneten Dichtklappen (15, 16) abgedeckt ist.

2. Abschiebewagen nach Anspruch 1, **dadurch gekennzeichnet, dass** zumindest die Seitenwände (2, 3) isoliert ausgebildet sind.

3. Abschiebewagen nach Anspruch 2, **dadurch gekennzeichnet, dass** der Muldenboden (7) isoliert ausgebildet ist.

4. Abschiebewagen nach einem oder mehreren der vorhergehenden Ansprüche, **dadurch gekennzeichnet, dass** die Austragseinrichtung (11) 2-stufig ausgebildet ist, wobei eine 1. Stufe durch einen Schiebeboden (12) gebildet wird, der zusammen mit der Abschiebewand (6) in Richtung der Entladeöffnung (4) verschiebbar ist und die 2. Stufe durch die Abschiebewand (6) gebildet wird, die relativ zum Schiebeboden (12) verschiebbar ist.

5. Abschiebewagen nach Anspruch 4, **dadurch gekennzeichnet, dass** die Abschiebewand mit federvorgespannten Dichtklappen (18) versehen ist, die den Spalt zwischen Abschiebewand (6) und dem Schiebeboden (12) abdecken.

6. Abschiebewagen nach Anspruch 4, **dadurch gekennzeichnet, dass** der Schiebeboden (12) an einer der Entladeöffnung (4) zugewandten Vorderkante (12a) mit federvorgespannten Dichtklappen (19) versehen ist, die den Spalt zwischen der Vorderkante (12a) des Schiebebodens (12) und dem Muldenboden abdecken.

7. Abschiebewagen nach einem oder mehreren der Ansprüche 1 bis 6, **dadurch gekennzeichnet, dass** jede Dichtklappe (15, 16, 18, 19) mit einem zugeordneten Federelement (17, 20) in einer Dichtstellung vorgespannt ist.

8. Abschiebewagen nach einem oder mehreren der Ansprüche 5 bis 7, **dadurch gekennzeichnet, dass** zumindest einzelne Dichtklappen isoliert ausgebildet sind.

9. Abschiebewagen nach Anspruch 1, **dadurch gekennzeichnet, dass** zumindest einzelne Dichtklappen mit einem Hohlraum zur Wärmeisolation ausgebildet sind.

10. Abschiebewagen nach Anspruch 1, **dadurch gekennzeichnet, dass** zumindest einzelne Dichtklappen in Sandwichbauweise ausgebildet sind, wobei eine mittlere Lage durch eine Isolierung oder einen isolierenden Hohlraum gebildet wird.

## Claims

1. Push-off carriage for transporting hot goods, in particular for transporting asphalt, having a recess (1) which has an unloading opening (4) and a discharge device (11) for discharging the hot goods via the unloading opening,
wherein
the recess (1) is delimited by means of a recess base (7), two side walls (2, 3), a rear wall (5), which is arranged in the region of the discharge opening (4) and which is preferably constructed in a pivotable manner, and a push-off wall (6), and the recess is constructed in an isolated manner and the discharge device (11) comprises the push-off wall (6) which is provided in the recess (1) and which can be displaced in the direction of the discharge opening (4), **characterised in that** the push-off wall (6) is provided with resiliently pretensioned sealing flaps (15, 16) which cover the two gaps between the push-off wall (6) and the two side walls (2, 3), wherein each gap is covered with a large number of sealing flaps (15, 16) which are arranged beside each other.

2. Push-off carriage according to claim 1, **characterised in that** at least the side walls (2, 3) are constructed in an isolated manner.

3. Push-off carriage according to claim 2, **characterised in that** the recess base (7) is constructed in an isolated manner.

4. Push-off carriage according to one or more of the preceding claims, **characterised in that** the discharge device (11) is constructed with two steps, wherein a first step is formed by a sliding base (12), which can be displaced together with the push-off wall (6) in the direction of the discharge opening (4) and the second step is formed by the push-off wall (6), which can be displaced relative to the sliding base (12).

5. Push-off carriage according to claim 4, **characterised in that** the push-off wall is provided with resiliently pretensioned sealing flaps (18) which cover the gap between the push-off wall (6) and the sliding base (12).

6. Push-off carriage according to claim 4, **characterised in that** the sliding base (12) is provided at a front edge (12a) facing the discharge opening (4) with resiliently pretensioned sealing flaps (19) which cover the gap between the front edge (12a) of the sliding base (12) and the recess base.

7. Push-off carriage according to one or more of claims 1 to 6, **characterised in that** each sealing flap (15, 16, 18, 19) is pretensioned in a sealing position with an associated resilient element (17, 20).

8. Push-off carriage according to one or more of claims 5 to 7, **characterised in that** at least individual sealing flaps are constructed in an isolated manner.

9. Push-off carriage according to claim 1, **characterised in that** at least individual sealing flaps are constructed with a hollow space for thermal insulation.

10. Push-off carriage according to claim 1, **characterised in that** at least individual sealing flaps are constructed in sandwich form, wherein a central position is formed by means of an insulation or an insulating hollow space.

## Revendications

1. Chariot de déversement pour le transport de produits chauds, en particulier pour le transport d'asphalte, avec une cavité (1), qui comprend une ouverture de déchargement (4), ainsi qu'avec un dispositif de distribution (11) du produit chaud par l'intermédiaire de l'ouverture de déchargement (4), sachant que
la cavité (1) est délimitée par un fond de cavité (7), deux parois latérales (2, 3), une paroi arrière (5), de préférence déplaçable, disposée dans la région de l'ouverture de déchargement (4), et une paroi de déversement (6), et que la cavité est de conception isolée, et que le dispositif de distribution (11) comprend une paroi de déversement (6), qui est prévue dans la cavité (1) et peut être déplacée dans la direction de l'ouverture de déchargement (4),
**caractérisé en ce que** la une paroi de déversement (6) est pourvue de volets d'étanchéité (15, 16), qui recouvrent les deux fentes entre la une paroi de déversement (6) et les deux parois latérales (2, 3), sachant que chaque fente est recouverte d'un grand nombre de volets d'étanchéité (15, 16), disposés les uns à côté des autres.

2. Chariot de déversement selon la revendication 1,
**caractérisé en ce que** les parois latérales (2, 3) au moins sont de conception isolée.

3. Chariot de déversement selon la revendication 2,
**caractérisé en ce que** le fond de ca-vité (7) est de conception isolée.

4. Chariot de déversement selon l'une ou plusieurs des revendications précédentes,
**caractérisé en ce que** le dispositif de distribution (11) est à deux étages, sachant que le premier étage est formé par un fond coulissant (12), qui peut être déplacé avec la paroi de déversement (6) en direction de l'ouverture de déchargement (4) et que le deuxième étage est formé la une paroi de déversement (6) qui peut être déplacée par rapport au fond coulissant (12).

5. Chariot de déversement selon la revendication 4,
**caractérisé en ce que** la paroi de déversement est pourvue de volets d'étanchéité (18) qui recouvrent la fente entre la paroi de déversement (6) et le fond coulissant (12).

6. Chariot de déversement selon la revendication 4,
**caractérisé en ce que** sur un bord avant (12a), dirigé vers l'ouverture de déchargement (4), le fond coulissant (12) est pourvu de volets d'étanchéité (19) qui recouvrent la fente entre le bord avant (12a) du fond de déversement (12) et le fond de la cavité.

7. Chariot de déversement selon l'une ou plusieurs des revendications 1 à 6,
**caractérisé en ce que** chacun des volets d'étanchéité (15, 16, 18, 19) sont précontraints dans une position d'étanchéité avec un élément élastique (17, 20) associé.

8. Chariot de déversement selon l'une ou plusieurs des revendications 5 à 7,
**caractérisé en ce que** certains volets d'étanchéité au moins sont de conception isolée.

9. Chariot de déversement selon la revendication 1,
**caractérisé en ce que** certains volets d'étanchéité au moins sont formés par un espace creux pout l'isolation thermique.

10. Chariot de déversement selon la revendication 1,
**caractérisé en ce qu**'au moins des clapets d'étanchéité individuels sont de construction sandwich, sachant qu'une couche centrale est formée par une isolation ou un espace vide isolant.
